# EUROPÄISCHE PATENTSCHRIFT

(11) **EP 3 583 645 B1**
(45) Veröffentlichungstag und Bekanntmachung des Hinweises auf die Patenterteilung: **13.01.2021**
(21) Anmeldenummer: 18714696.4
(22) Anmeldetag: 20.02.2018
(51) Int. Cl.: H01M 8/0206, H01M 8/021, H01M 8/0228, H01M 8/0247, H01M 8/1018

(54) **VERFAHREN ZUR HERSTELLUNG EINER BIPOLARPLATTE FÜR PROTON-EXCHANGE-MEMBRANE-BRENNSTOFFZELLEN (PEMFC)**
METHOD OF MANUFACTURING A BIPOLAR PLATE FOR PROTON EXCHANGE MEMBRANE FUEL CELLS (PEMFC)
PROCÉDÉ DE FABRICATION D'UNE PLAQUE BIPOLAIRE POUR PILES À COMBUSTIBLE À MEMBRANE À ÉCHANGE DE PROTONS (PEMFC)

(30) Priorität: 20.02.2017 DE 102017202679
(43) Veröffentlichungstag der Anmeldung: 25.12.2019
(73) Patentinhaber: Fraunhofer-Gesellschaft zur Förderung der angewandten Forschung e.V., 80686 München (DE); Technische Universität Dresden, 01069 Dresden (DE)
(72) Erfinder: TOPALSKI, Slavcho, 44143 Dortmund (DE); ROCH, Teja, 44161 Dortmund (DE); STUCKY, Thomas, 44139 Dortmund (DE); ZWICK, Axel, 58119 Hagen-Hohenlimburg (DE); MAURIZIO, Giorgio, 58454 Witten (DE)
(74) Vertreter: Pfenning, Meinig & Partner mbB
(86) Internationale Anmeldenummer: PCT/EP2018/054122
(87) Internationale Veröffentlichungsnummer: WO 2018/150046

(56) Entgegenhaltungen:
- EP-A1- 2 913 876
- WO-A1-01/28020
- WO-A1-2014/173750
- DE-A1-102016 102 393
- US-A1- 2004 106 029
- US-A1- 2014 051 012
- US-A1- 2014 302 416
- YI PEIYUN ET AL: "Composition optimization of multilayered chromium-nitride-carbon film on 316L stainless steel as bipolar plates for proton exchange membrane fuel cells", JOURNAL OF POWER SOURCES, ELSEVIER SA, CH, Bd. 236, 21. Februar 2013 (2013-02-21), Seiten 47-53, XP028586817, ISSN: 0378-7753, DOI: 10.1016/J.JPOWSOUR.2013.02.034
- WU B ET AL: "Chromium nitride films on stainless steel as bipolar plate for proton exchange membrane fuel cell", JOURNAL OF POWER SOURCES, ELSEVIER SA, CH, Bd. 194, Nr. 2, 18. Juni 2009 (2009-06-18) , Seiten 976-980, XP026499687, ISSN: 0378-7753, DOI: 10.1016/J.JPOWSOUR.2009.06.029 [gefunden am 2009-06-18]

## Beschreibung

Die Erfindung betrifft eine Bipolarplatte für elektrochemische Zellen, insbesondere für Polymerelektrolytbrennstoffzellen bzw. Proton-Exchange-Membrane- (PEM)-Brennstoffzellen sowie ein Herstellungsverfahren. Brennstoffzellen werden für die Gewinnung elektrischer Energie aus einem Brennstoff und einem Oxidationsmittel durch eine elektrochemische Reaktion eingesetzt. Insbesondere bei mobilen Anwendungen, wie z.B. in Fahrzeugen sind Proton-Exchange-Membrane- (PEM) Brennstoffzellen (PEMFC) geeignet. Es besteht aber auch die Möglichkeit elektrochemische Zellen so zu betreiben, dass mit elektrischer Energie eine elektrochemische Reaktion initiiert wird, bei der Wasserstoff als ein Reaktionsprodukt erhalten werden kann. Nachfolgend soll jedoch generell der Begriff Brennstoffzelle benutzt werden, wobei natürlich auch andere elektrochemische Zellen unter diesen Begriff verstanden werden sollen.

Bipolarplatten (BiP) dienen in der Brennstoffzelle der Zufuhr von Wasserstoff, Sauerstoff und der Ableitung von Wasser, Kühlwasser sowie dem Abgreifen von freiwerdenden Elektronen von den Elektroden der jeweiligen Brennstoffzelle, um eine elektrische Spannung zur Verfügung zu stellen.

Eine Brennstoffzelle liefert zwischen den beiden Elektroden eine elektrische Nutzspannung von 0,5 V - 2,0 V. Es ist wichtig, dass die infolge der elektrochemischen Reaktion frei werdenden Elektronen auf der Wasserstoffseite (Anodenseite) möglichst effizient aufgenommen und auf der Sauerstoffseite (Kathodenseite) dem Prozess wieder möglichst effizient zugeführt werden können. Dies bedeutet, dass möglichst kleine elektrische Kontakt- oder Durchtrittswiderstände auftreten. Ein elektrischer Widerstand an dieser Stelle hat direkten Einfluss auf die Effizienz der BiP und somit der Brennstoffzelle.

Zwischen einer Bipolarplatte und der Membran, als Festelektrolyt, ist ein gasdurchlässiges Element angeordnet, das auch als Gas Diffusion Layer (GDL) bezeichnet werden kann, und das z.B. ein textiles offenporöses Gebilde ist, das bevorzugt aus bzw. mit elektrisch leitenden Fasern, insbesondere Kohlenstofffasern gebildet ist. Ein gasdurchlässiges Element erfüllt die Aufgaben der möglichst vollflächigen, homogenen Verteilung von aus Kanälen einer BiP austretendem Gas auf der Oberfläche der Membran und der Weiterleitung der vom Wasserstoff als Brennstoff abgegebenen Elektronen an die BiP und die von der BiP zugeführten Elektronen an das sich bildende Wasser auf der Oxidationsmittelseite weiterzuleiten.

Um den elektrischen Übergangswiderstand für die Elektronen (und damit die Verluste) möglichst gering zu halten, sollte einerseits der elektrische Kontaktwiderstand der BiP möglichst gering sein, andererseits muss die GDL mit hoher Flächenpressung gegen die BiP gepresst werden, um möglichst viele Kontaktpunkte und damit elektrische Strompfade zu bilden. Gleichzeitig muss anfallendes Prozesswasser abgeführt werden bzw. die Membraneinheit befeuchtet werden. Es ist bekannt, dass der elektrische Kontaktwiderstand (und damit der Verlust) mit steigender Flächenpressung sinkt. Die Flächenpressung kann aber nicht beliebig gesteigert werden, da dann die Membran und die BiP, die vorteilhaft aus einem möglichst dünnen Metallblech, bevorzugt einem Edelstahlblech gebildet ist, mechanisch Schaden nehmen.

Der Kontaktwiderstand der BiP kann durch Oberflächenmodifikation des für die Herstellung einer BiP eingesetzten Metalls (z.B. rost- und säurebeständige, Stähle) gesenkt werden. Bei ausreichendem Korrosionsschutz durch eine Oberflächenmodifikation ist es auch denkbar Metalle mit geringerem Rost- und Korrosionsschutz einzusetzen. Hierfür gibt es verschiedene Möglichkeiten:
Der elektrische Übergangswiderstand ist üblicherweise aufgrund der natürlichen, schlecht leitenden Passivschicht an der Oberfläche des Metalls, insbesondere z.B. bei rost- und säurebeständigem Stahl in Form einer Chromoxidschicht relativ groß. Eine mechanische, chemische und/oder physikalische Entfernung einer Passivschicht vor Inbetriebnahme bringt keine befriedigende Verbesserung und diese regeneriert sehr schnell.

Durch Erhöhung des Anpressdrucks an eine BiP wird die GDL verdichtet und stärker an die Oberfläche der BiP gedrückt. Der Erhöhung des Anpressdrucks sind jedoch aufgrund der Empfindlichkeit der Membran, der Notwendigkeit, die GDL nicht zu sehr zu verdichten, um eine ausreichende Gasdiffusion zu gewährleisten und der mechanischen Stabilität der BiP Grenzen gesetzt. Die mechanische Stabilität der BiP Platte kann hierbei allerdings, wie im Weiteren beschrieben, durch eine geeignete Oberflächenveredelung erhöht werden.

Beispielsweise ist eine solche Oberflächenmodifkation sowohl in der Veröffentlichung Yi Peiyun et al: "Composition optimization of multilayered chromium-nitride-carbon film on 316L stainless steel as bipolar plates for proton exchange membrane fuel cells", Journal of Power Sources, Elsevier SA, CH, Bd. 236, 21. Februar 2013, Seiten 47-53, als auch in Wu B et al.: "Chromium nitride films on stainless steel as bipolar plate for proton exchange membrane fuel cell", Journal of Power Sources, Elsevier SA, CH, Bd. 194, Nr. 2, 18. Juni 2009, Seiten 976-977, beschrieben.
In den Dokumenten US 2004/0106029 A1, WO 01/28020 A1, US 2014/0302416 A1 und der US 2014/0051012 A1 werden Beschichtungen eines Metalls mit amorphen bzw. graphitischen Kohlenstoff vorgeschlagen. In der DE 10 2016 102 393 A1 weist die Beschichtung hingegen eine DLC Schicht mit diamantartigen Kohlenstoff auf. In der WO 2014/173750 A1 und der EP 2 913 876 A1 wird vorge schlagen, den Kontaktwiderstand durch Erhöhung der Oberflächenrauheit eines Substrats mittels Strukturierung zu verringern.

Die einzelnen, oben beschriebenen Maßnahmen reduzieren den Kontaktwiderstand entweder nur unzureichend, sind kostspielig oder führen zu Nachteilen bezüglich der chemischen und/oder physikalischen Stabilität, Zuverlässigkeit oder Haltbarkeit der Brennstoffzelle.

Es ist daher Aufgabe der Erfindung, Möglichkeiten für eine dauerhafte Reduzierung des elektrischen Kontakt- und/oder Überganswiderstands zwischen einer Oberfläche einer Bipolarplatte, die aus einem Edelstahl gebildet ist, und einem gasdurchlässigen Element (GDL) einer Brennstoffzelle, die in berührendem Kontakt miteinander stehen, anzugeben, wobei die Kosten für die Herstellung in einem vertretbaren Rahmen gehalten werden können.

Erfindungsgemäß wird diese Aufgabe mit einem Herstellungsverfahren, das die Merkmale des Anspruchs 1 aufweist, gelöst. Vorteilhafte Ausgestaltungen und Weiterbildungen können mit in untergeordneten Ansprüchen bezeichneten Merkmalen realisiert werden.

Die erfindungsgemäße Bipolarplatte für elektrochemische Zellen, insbesondere für Proton-Exchange-Membrane- (PEM) Brennstoffzellen, ist mit einem metallischen Substrat gebildet. An der Oberfläche ist das Substrat mit einer den elektrischen Kontaktwiderstand verringernden kohlenstoffbasierten Schicht, einem Schichtsystem oder einer Grenzschicht, die aus einer oberflächennahen hauptsächlich sp2-gebundenen kohlenstoffbasierten Schicht mit einem Kohlenstoffanteil im Bereich 50 % bis 100 % gebildet ist, die auf einer gegenüber dem Ausgangsmaterial modifizierten metallischen Oberfläche des Substrats aufgebracht ist, versehen.

Es besteht auch die Möglichkeit, dass zwischen der kohlenstoffbasierten Schicht oder der mit Kohlenstoff angereicherten Schicht und der Oberfläche des Substrats eine Übergangszone mit einem Kohlenstoffgradienten ausgebildet ist.

Einzelne Erhebungen und/oder Vertiefungen sollten an der Oberfläche des Substrats so dimensioniert und geometrisch gestaltet sein, dass Fasern, mit denen das gasdurchlässige Element als textiles Gebilde gebildet ist, über ihren äußeren Umfang mit mindestens 10 % ihrer äußeren Mantelfläche in berührenden Kontakt, in einem Bereich der Oberfläche des Substrats in dem eine Vertiefung vorhanden ist und in dem sich eine Faser und die Oberfläche des Substrats berühren, in berührendem Kontakt stehen; wobei bevorzugt Vertiefungen in der Oberfläche des Substrats mit gleicher Ausrichtung und in konstanten Abständen zwischen nebeneinander angeordneten Vertiefungen ausgebildet sind.

Ein metallisches Substrat kann an der Oberfläche, die mit einem gasdurchlässigen Element innerhalb der elektrochemischen Zelle in berührendem Kontakt steht, eine Strukturierung, die mit Erhebungen und/oder Vertiefungen in der jeweiligen Oberfläche gebildet ist, aufweisen.

Bei dem Verfahren zur Herstellung einer Bipolarplatte wird so vorgegangen , dass
- eine Strukturierung der mit einem gasdurchlässigen Element in Kontakt stehenden Oberfläche eines Substrats, die mit einem gasdurchlässigen Element in einer Brennstoffzelle in berührendem Kontakt steht, mit Erhebungen und/oder Vertiefungen an dieser Oberfläche ausgebildet wird. Dies kann mittels Werkstoffabtrag und/oder durch ein Prägeverfahren erreicht werden. Desweiteren wird vor der Strukturierung mindestens einer der nachfolgenden zwei Schritte durchgeführt:
- Die jeweilige Oberfläche des Substrats wird mit einer graphitischen Schicht, die bevorzugt vollständig geschlossen mit mehreren übereinander angeordneten Atomlagen gebildet ist, im Vakuum mittels eines Plasma, das bevorzugt mit einer elektrischen Bogenentladung generiert wird, beschichtet.
- Es wird eine Randschicht an der jeweiligen Oberfläche des Substrats durch ein Nitrier-, ein Carburier- oder ein Carbonitrierverfahren bei Einhaltung einer dafür geeigneten Atmosphäre mittels eines Plasma ausgebildet, wobei bevorzugt bei einem Carbonitrieren zuerst eine Nitrierung und nachfolgend eine Carburierung der Randschicht durchgeführt wird.

Vorteilhaft kann eine Erhöhung der Rauheit und der spezifischen Oberfläche der Oberfläche des Substrats, die mit einem gasdurchlässigen Element in berührenden Kontakt innerhalb einer Brennstoffzelle steht, mittels eines Ätzverfahrens erreicht werden.

Günstig ist es vor dem Aufbringen einer graphitischen kohlenstoffbasierten Schicht, einem Schichtsystem oder einer Grenzschicht oder der Ausbildung einer Randschicht eine auf der Oberfläche des Substrats vorhandene Oxidschicht zumindest teilweise zu entfernen. Die Entfernung kann bevorzugt mittels eines Ätzprozesses in Argon, Stickstoff oder eine Reduzierung des Oxids in einer besonders bevorzugt wasserstoffhaltigen Atmosphäre durchgeführt werden. Dabei kann eine vollständige Entfernung einer Oxidschicht vorteilhaft sein. Insbesondere bei Chromoxidschichten kann aber eine teilweise Entfernung vorteilhaft sein. Es kann eine partielle Umwandlung des Chromoxids genutzt werden, um z.B. bei rost- und säurebeständigen Stählen, die Anreicherung des die Passivierungsschicht bildenden Metalls, z.B. Chrom dort für den Korrosionsschutz im Verletzungsfall der darüber liegenden Kohlenstoff- und Stickstoff reichen Zone, auszunutzen.

In einer Ausführungsform kann eine Haftvermittlerschicht, bevorzugt als dünne Schicht aus Chrom, Titan oder einer Schicht, die mit Chrom und Titan gebildet ist, vor dem Aufbringen der graphitischen kohlenstoffbasierten Schicht, einem Schichtsystem oder einer Grenzschicht bevorzugt mittels einer elektrischen Bogenentladungsprozesses im Vakuum auf der Substratoberfläche ausgebildet werden.

Die graphitische kohlenstoffbasierte Schicht, ein Schichtsystem oder eine Grenzschicht kann mit ionisierten und beschleunigten Kohlenstoffionen, die auf der Oberfläche des Substrats vorhanden Kohlenstoffatome bei Temperaturen im Bereich 80 °C bis 600 °C, bevorzugt im Bereich 200 °C bis 500°C auftreffen, insbesondere mit einer Schichtdicke < 80 nm ausgebildet werden. Dabei kann eine zumindest nahezu 100 %-ige Ionisierung des Kohlenstoffs mittels eines Pulsbogenverdampfers erreicht werden. Dabei ist es vorteilhaft, dass hoch ionisierte und beschleunigte Kohlenstoffionen auf Kohlenstoffatome auf der Oberfläche bei den erhöhten Temperaturen auftreffen. Die Schicht sollte hierbei auf eine Kohlenstoff sublantierte Schicht aufgebracht werden. Um einen Austritt von Metallionen zu minimieren und damit eine Vergiftung der Membraneinheit zu verhindern, sollten keine metallischen Bestandteile eingebaut sein. Die Biasspannung sollte hierbei niedriger als bei einer Sublantation gewählt sein.

Bei der gleichzeitigen Sublantation- bzw. Implantation von Kohlenstoff und Stickstoff, in einem Bandlauf, können die Elektronen eines Verdampfers für Kohlenstoff, bevorzugt eines Lichtbogenverdampfers, im Vakuum genutzt werden, um mit Hilfselektroden Stickstoff zu ionisieren. Die Stickstoffionen können dann mit einer Biasspannung Richtung Blechoberfläche beschleunigt werden. Gleichzeitig kann der hochionisierte Kohlenstoff der Verdampfer mit gleicher Biasspannung ebenfalls in die Metalloberfläche eingebracht werden.

Der Diffusionsprozess des Stickstoffs in die Tiefe des Substratwerkstoffs kann durch auftreffende Kohlenstoffionen oder der Diffusionsprozess des Kohlenstoffs durch auftreffende Stickstoffionen beschleunigt werden. Bei einem solchen Prozess kann auch auf die Entfernung der Chromoxidschicht verzichtet werden.

Das Plasmanitrocarborieren zur Ausbildung der Randschicht kann dabei in einer vakuumnahen Stickstoff enthaltenden Atmosphäre, bei einem Druck im Bereich 10⁻¹ mbar bis 10⁻³ mbar durch eine Nitrierbehandlung bei der Stickstoffionen in Richtung Substratoberfläche beschleunigt werden, durchgeführt werden. Dabei ist bevorzugt am Substrat eine elektrisch negative Biasspannung im Bereich 500 V bis 1000 V angelegt oder das Substrat ist an Erdpotential angeschlossen. Es sollte eine Temperatur im Bereich 350 °C - 500°C eingehalten sein.

Plasmanitrocarborierte Schichten können als harte Randschichten so ausgebildet werden, dass ein höherer Anpressdruck auf die Bipolarplatte ausgeübt werden kann und damit verbesserte elektrische Kontaktwiderstände erzielbar sind. Es können statt höherer Anpressdrücke auch dünnere Bleche als Substrate bei gleichen Anpressdrücken verwendet werden. Plasmanitrocarburierte Oberflächen können auch als korrosionsfeste Oberflächen mit guter Haftung für Kohlenstoffschichten genutzt werden.

Oberflächenschichtsysteme oder-strukturierungen können, ohne gravierende Einbußen in der Performance in der Brennstoffzelle in einem Bandveredelungsprozess hergestellt werden und danach kann das entsprechend behandelte bandförmige Substratmaterial zu Bipolarplatten umgeformt werden. Hierbei können Randschichten in der Zone höchster Umformgrade gereckt und ausgedünnt werden.

Aufgrund der Oberflächenmodifizierung an Substratoberflächen können preiswertere Substratwerkstoffe eingesetzt werden.

Vertiefungen in der strukturierten Substratoberfläche können unregelmäßig ausgebildet sein. Bevorzugt sind sie aber mit gleicher Ausrichtung und in konstanten Abständen zwischen nebeneinander angeordneten Vertiefungen ausgebildet. Vorteilhafterweise können diese Vertiefungen oder Oberflächenstrukturen so ausgeprägt sein, das in Bereichen der BiP die nicht in unmittelbarem Kontakt zur GDL stehen, eine Vorzugsflussrichtung von Reaktionsprodukten des Brennstoffzellenprozesses aus dem aktiven Bereich existiert. In diesem Ausführungsbeispiel würde die Oberflächenstruktur anisotrope Eigenschaften aufweisen und entsprechend ausgeführt sein. Weiterhin können vorteilhafte Eigenschaften einer derartigen Strukturierung darin bestehen, dass bei nicht regelmäßigem Kontakt zwischen GDL und BiP und damit fehlendem elektrisch leitendem Kontakt oder einem reduzierten Anpressdruck zwischen GDL und BiP, eine verbesserte elektrische Kontaktierung möglich wird.

Auf der Oberfläche, die mit dem gasdurchlässigen Element in berührendem Kontakt steht und strukturiert und/oder mit erhöhter Rauheit ausgebildet ist, kann zur weiteren Erhöhung der elektrischen Leitfähigkeit bzw. einer Reduzierung des elektrischen Kontaktwiderstandes eine Schicht oder Randzone, die bevorzugt mit aus amorph graphitischem oder nano- bzw. mikrostrukturiertem Kohlenstoff gebildet ist, aufgebracht sein. Allein oder zusätzlich dazu kann eine Randschicht an der Oberfläche der BiP, die mit Nitrid und/oder Kohlenstoff, durch Nitrieren und/oder Carburieren, insbesondere durch Plamsanitrocarbirieren gebildet ist, ausgebildet sein.

Eine graphitische Kohlenstoffschicht sollte bevorzugt vollständig geschlossen mit mehreren übereinander bzw. bevorzugt nebeneinander insbesondere senkrecht zur BiP-Oberfläche, angeordneten Atomlagen bzw. Strukturen gebildet sein. Sie kann im Vakuum mittels eines Plasmas, das bevorzugt mit einer elektrischen Bogenentladung generiert wird, ausgebildet werden. Bevorzugt ist das Plasma als Pulsplasma mit nahezu 100% lonisierungsgraden auszubilden. Hierbei sollte durch eine hohe Energieeinbringung und damit Temperatur des Prozesses bzw. externe Heizquellen sicher gestellt werden, dass sich die Kohlenstoffschichten graphitisch (sp2 Bindung) ausbilden. Beispielhaft sind dies Oberflächentemperaturen im Bereich 50°C -500°C, bevorzugt bei ca. 300 °C. Hohe Ionisierungen und anliegende Beschleunigungsspannungen (Bias) zwischen Verdampfer und Metalloberfläche des Substrates führen dazu, dass die Ionen mit hohen Energien bevorzugt > 100 eV auf Kohlenstoff an der Oberfläche auftreffen. Dies führt zu besonders vorteilhaften Strukturen der Kohlenstoffschichten bezüglich elektrischem Kontaktwiderstand und Haftfestigkeit. Für die Ausbildung sp2 gebundener Schichten mit niedrigem elektrischen Kontakt bzw. spezifischem Widerstand ist das Verhältnis aus Temperatur, Vakuumdruck (ggf. mit Prozessgas) und Beschleunigungsspannung der Kohlenstoffionen wichtig, wobei zu beachten ist, dass bei zu hohen Drücken die Ausbildung vorteilhaft elektrisch leitfähiger Schichten unterdrückt werden kann. Durch geeignete Parameterwahl können im Grenzwert auch geeignete Kohlenstoffschichten bei Raumtemperatur hergestellt werden.

Die Beschleunigungsspannung sollte hierbei typischerweise niedriger als bei vorlaufenden Kohlenstoff Sublantationsprozessen zur Steigerung der Haftfestigkeit gewählt werden. Vorteilhaft für eine besonders hohe Haftfestigkeit ist es vor der Kohlenstoffbeschichtung hoch ionisierten Kohlenstoff durch hohe Beschleunigungsspannungen (z.B. 1000 V) in die Oberfläche zu implantieren bzw. zu subplantieren. Derartige Schichten können wie im Falle einer plasmanitrocarburierten Schicht auch schon als Kohlenstoffelektrode (Schicht- bzw. Randschichtdicke 1 nm - 20 nm) verwendet werden.

Eine weitere graphitische Kohlenstoff-Deckschicht sollte möglichst dünn z.B. < 80 nm ausgeführt werden. Um einen Austritt von Metallionen zu minimieren und damit eine Vergiftung der Membraneinheit zu verhindern, sollten keine metallischen Bestandteile eingebaut sein.

Bedingt durch den Prozess der Bogenentladung im Vakuum können auch Kohlenstoffpartikel in der Schicht vorkommen bzw. kann es zu Defekten, wie z.B. Fehlstellen führen. Bei einer gefilterten Abscheidung z. B. mit einem magnetischen Filter oder der Abscheidung mittels alternativer PVD-Verfahren, wie z.B. einem Sputterprozess können auch nahezu partikelfreie Schichten mit Kohlenstoff hergestellt werden.

Zwischen der strukturierten Oberfläche eines Substrats und einer Schicht oder einer Randschicht kann eine Zwischenschicht, insbesondere eine Chromschicht vorhanden sein, mit der die Haftung der Kohlenstoffschicht als auch die Korrosionsbeständigkeit der BiP verbessert werden kann. Insbesondere im Bereich von Rissen, lokalen Defekten bzw. Schweißnähten kann eine Chromzwischenschicht dafür sorgen, dass sich eine stabile Chrompassivierungsschicht ausbildet. Hierdurch kann die Korrosion aber auch der Austritt von Eisenionen, die die Membraneinheit einer elektrochemischen Zelle vergiften können, verhindert werden und die Umformeignung können verbessert werden. Tritt eine zu starke Kontamination der Membraneinheit durch Chromionen auf, kann die Chromschicht z.B. durch eine Titanschicht ersetzt werden. Es kann aber auch eine Zwischenschicht gewählt werden, die sowohl mit Chrom, wie auch mit Titan gebildet ist.

Als Reinigungsprozess zur Beseitigung der Oxidschichten vor dem Aufdampfen der Haftvermittlerschicht, bevorzugt einer Chromschicht, können die Oberflächen vorher z.B. durch Metallionensputtern gereinigt werden.

Eine Vorteilhafte Variante der Herstellung einer BiP besteht darin, die Beschichtungen und Oberflächenstrukturierungen an bandförmigem Material auszuführen und dieses bandförmige Material danach in nachfolgenden Prozessen umzuformen, in Form zu schneiden und zu verschweißen. Für einen solchen Bandprozess ist es vorteilhaft, das Band aus einem klassischen Bandglühprozess mit einer reduzierenden Atmosphäre (z.B. geeigneter Wasserstoffanteil) unter Schutzgasbedingungen heraus zu schleusen. Hier kann ohne zusätzliche Bearbeitungsschritte eine vollständige oder partielle Reduzierung der Oxidschicht z.B. Chromoxid gewährleistet und die Bandwärme kann im weiteren Prozessverlauf genutzt werden. In einer Vakuumkammer kann ein solcher Prozess durch Ätzen in einem wasserstoffhaltigen Gas durchgeführt werden.
Besonders vorteilhaft ist es die Chromanreicherung, die typischerweise bei Edelstahl in der passivierenden Zwischenschicht auftritt, nach einer reduzierenden Behandlung anstelle einer Chromhaftvermittlerschicht zu nutzen.

Bei der Herstellung einer erfindungsgemäßen BiP kann so vorgegangen werden, dass eine Strukturierung der mit einem gasdurchlässigen Element in Kontakt stehenden Oberfläche einer BiP, die mit einem gasdurchlässigen Element (GDL) in einer Brennstoffzelle in berührendem Kontakt steht, mit Erhebungen und/oder Vertiefungen an dieser Oberfläche mittels Werkstoffabtrag und/oder durch ein Prägeverfahren ausgebildet wird. Die Strukturierung kann aber auch durch das Zusammenwirken der Oberflächenbehandlungen mit hohen Umformgraden des Bleches zur Ausbildung der Flussfeldgeometrie herbeigeführt werden.

Der Werkstoffabtrag kann mit mindestens einem Laserstrahl, bevorzugt durch Interferenz mehrerer Laserstrahlen in einem bestrahlten Bereich der jeweiligen Oberfläche der BiP erfolgen. Dabei kann vorteilhaft ein lokal definierter Werkstoffabtrag in sehr kurzer Zeit erreicht werden. So können verschiedenste Muster in definierter Form an der Oberfläche durch Strukturierung erhalten werden, so dass ein relativ hohes Maß an Flexibilität gegeben ist.

Die Rauheit und spezifische Oberfläche der jeweiligen Oberfläche eines Substrats für eine BiP können durch Beschuss mit Ionen, die bevorzugt eine Energie im Bereich 10² eV bis 75 ^{∗} 10³ eV aufweisen, im Vakuum erhöht werden.

Eine Randschicht kann an der jeweiligen Oberfläche des Substrats einer BiP auch durch ein Nitrier-, ein Carburier oder ein Nitrocarborierverfahren bei Einhaltung einer dafür geeigneten Temperatur und Atmosphäre mittels eines Plasma ausgebildet werden. Bevorzugt kann eine Randschicht mittels Nitrocarborieren so erhalten werden, dass zuerst eine Nitrierung und nachfolgend eine Carburierung der Randschicht durchgeführt wird. Vorteilhaft ist hier, dass hierdurch auch zusätzlich harte Randschichten erzeugt werden, die die Verformung der Bipolarplatte im umgeformten Zustand behindern und hiermit den Einsatz dünnerer Bleche oder von höheren Anpressdrücke ermöglichen.

Eine Verbesserung des elektrischen Stromübergangs von der GDL zur BiP ohne Erhöhung des Anpressdruckes kann durch Kombination einer Mikrostrukturierung der Oberfläche der BiPs mit einer chemischen Änderung (Beschichtung, Nitrierung) erzielt werden. Dadurch wird die Größe der Flächen, die in berührendem Kontakt zueinander stehen, vergrößert und dadurch kann der intrinsische elektrische Oberflächenwiderstand verringert werden.

Die Ausprägung der Strukturierung kann sowohl stochastisch sein, d h. zufällig beispielsweise durch einen Ätzprozess oder deterministisch durch eine Laserstrukturierung oder einen Prägeprozess. Besonders vorteilhaft ist hierbei die Kombination aus Werkstoffabtrag mittels Laserstrukturierung oder einem Prägeprozess sowie der darauffolgenden Ätzung der Substratoberfläche.

Der beschriebene Lösungsweg hat den Vorteil, dass geringere elektrische Kontaktwiderstände als mit Gold beschichtete Oberflächen erreicht werden können. Damit sind wesentliche Kostenersparnisse und Effizienzsteigerungen bei BiP möglich. Weitere Kostenersparnisse bei der Herstellung der Oberflächenstrukturen und der Randschichten liegen in der Ausführung der Prozessschritte in einem Bandprozess, insbesondere der Rolle zu Rolle Bearbeitung und der anschließenden Bearbeitung des veredelten Bandmaterials zu BiP bzw. Brennstoffzellen. Derartige, haftfeste Schichten können auf Bandmaterial hergestellt werden und anschließend umgeformt werden, ohne dass die Performance in der Brennstoffzelle deutlich verschlechtert wird.

Hierbei können die Randschichten in der Zone höchster Umformgrade gereckt und ausgedünnt werden. In diesen Bereichen kann es auch zur Ausprägung einer umformungsbedingten charakteristischen Rissstruktur der Beschichtung bzw. Randschicht kommen.

Oberflächenstrukturierungen und/oder Oberflächenschichten bzw. Oberflächenschichtsysteme können aufgrund ihrer elektrischen Eigenschaften und der Korrosionsschutzwirkung genutzt werden, um preisgünstigere Metalle in Brennstoffzellen einsetzen zu können. Dazu gehören z.B. Metallbänder aus 1.4301 oder auch ferritische Stähle.

Weiterhin bietet die Kombination der Verfahren Oberflächenstrukturierung mit einer Oberflächenbeschichtung den Vorteil weiter reduzierte elektrische Kontakt- und Übergangswiderstände als auch einen erhöhten Korrosionswiderstand durch die Oberflächenfunktionalisierung zu ermöglichen.

Beispielhaft kann eine BiP folgender maßen hergestellt werden:
Die Strukturierung kann z. B. mittels eines ns-gepulst betriebenen Nd:YAG-Laserstrahls ausgebildet werden. Dieser Laserstrahl wird beispielsweise mit einer Pulslänge von 10 ns, einer Wellenlänge von 1064 nm und einer Pulsenergie von 1 J auf die Oberfläche gelenkt. Zwischen Laserquelle und Oberfläche der BiP kann der Laserstrahl zusätzlich über eine Laseroptik modifiziert werden. Dabei können z.B. durch Aufspalten des ursprünglichen Laserstrahles zwei Laserstrahlen erhalten werden, die auf der Oberfläche des Substrats wieder überlagert (interferieren) werden. Die Überlagerung und Fokussierung kann so erfolgen, dass in dem bestrahlten Gebiet Pulsenergiedichten (Laserfluenzen) von ca. 2 J/cm² erreicht werden. Der Winkel zwischen den interferierenden Teillaserstrahlen kann so gewählt werden, dass die resultierende Interferenzperiode auf der Oberfläche 20 µm entspricht. Hierdurch können linienförmige Strukturen mit einer Periode von 20 µm erzeugt werden. Die Strukturtiefen liegen in diesem Fall bei ca. 1 µm - 10 µm.

Beim Metalionensputtern zur Ausbildung einer Struktur auf der jeweiligen Oberfläche eines Substrats kann die jeweilige Oberfläche durch Beschuss von Ionen ausreichender Energie (10² eV bis mehreren 10³ eV) abgetragen werden. Dem Zugrunde liegt ein Impulsübertrag eines auftreffenden Ions mit der Substratoberfläche. Durch elastische "Kernstöße" wird der Impuls in den Substratwerkstoff eingebracht und initiiert eine Stoßkaskade. Dadurch können Oberflächenatome einen nach außen gerichteten Impuls erhalten. Liegt die kinetische Energie der einfallenden Ionen über der Bindungsenergie der Atome des Substratwerkstoffs, können diese vorwiegend als einzelne Atome, aber auch in Form von Atomclustern, von der Substratoberfläche zerstäubt werden. Die Strukturtiefen liegen in diesem Fall bei ca. 0,05 µm - 2 µm.

Durch Anlegen einer hohen elektrischen Spannung (Biasspannung) an das Substrat, das vorteilhaft in einer Vakuumkammer im Druckbereich von 10⁻⁵ mbar - 10² mbar angeordnet ist, wird ein Niederdruckplasma mit Hilfe von Edelgasen erzeugt. Mit einer Mischung von angeregten Metall- und Gasionen, können die erzeugten hochenergetischen Teilchen durch das angelegte elektrische Strompotential in Richtung der Substratoberfläche beschleunigt werden und es kann damit Werkstoff von der Oberfläche abgetragen werden. Hierdurch kann eine Plasmafeinreinigung der Oberfläche eines Substrats für eine BiP realisiert und die Oberflächenrauheit der so beeinflussten Oberfläche erhöht werden.

Eine strukturierte Oberfläche eines Substrats kann zusätzlich mit einer aus mindestens einer Schicht gebildeten Beschichtung versehen werden.

Prinzipiell ist eine Metallisierung metallischer Oberflächen zur Passivierung bekannt. So werden z.B. Metalloberflächen verzinkt oder verchromt, um sie langfristig vor Korrosion zu schützen. In der Brennstoffzelle treten zum Teil, je nach Betriebszustand, hohe Redoxpotentiale auf, die sehr aggressiv wirken und Schädigungen bzw. chemische Prozesse bewirken können. Werden BiP auf Metallbasis verwendet, können diese korrodieren. Das Ziel bei einer metallischen BiP ist es, die Korrosionsbeständigkeit zu erhöhen und eine gute elektrische Leitfähigkeit zu gewährleisten.

Dies kann durch eine Abscheidung einer kohlenstoffbasierten, graphitähnlichen Schicht- bzw. eines solchen Schichtsystems erreicht werden.

Eine Beschichtung kann auch durch Modifizierung der Randschicht eines metallischen Substrats bzw. eines Metallbandes ausgebildet werden. Dies kann mittels Plasmanitrieren, als eine thermochemische Behandlung der Oberfläche von Stählen mit z.B. Stickstoff bei höheren Temperaturen (T =200 °C - 900° C) erreicht werden. Das Plasmanitrieren wird normalerweise zur Verbesserung der Verschleißeigenschaften eingesetzt. Speziell bei nichtrostenden Stählen kann durch das Abbinden von Chrom zu Chromnitrid (CrN) die korrosionsschützende Wirkung der sich immer wieder neu bildenden Passivierungsschicht aus Chromoxid verloren gehen.

Vorteilhaft ist es, das Plasmanitrieren in Form hoch ionisierter und durch eine Biasspannung beschleunigter N-Ionen bei Temperaturen am Werkstück im Bereich 300 °C - 500°C durchzuführen. Eine geeignet Methode kann hierbei die bogengestützte Glimmentladung sein. Bei diesem Prozess werden mittels eines Bogenverdampfers Elektronen erzeugt und in Richtung auf eine zusätzliche gekühlte Anode beschleunigt, während entstehende Ionen abgeschirmt werden können. Angeregt durch den Elektronenstrom wird, bei Drücken im Bereich von 10⁻¹ mbar - 10⁻³ mbar, Stickstoff oberhalb der zu behandelnden Oberfläche ionisiert und auf das entweder auf Erdpotential (Masse) oder mit einer negativen Biasspannung von ca. 200 V - 5000 V liegende Substrat beschleunigt. Die auf die Passivierungsschicht, bei austenitischen Stählen bevorzugt eine Chromoxidschicht, auftreffenden N-Ionen können oberflächennah implantiert / sublantiert werden bzw. eindiffundieren. Die Oberfläche wird dabei gleichzeitig gereinigt. In Kombination mit einer nach geschalteten oder gleichzeitig durchgeführten Kohlenstoff -Implantation oder -Subplantation kann dabei eine Randschicht mit hohen Kohlenstoff- und Stickstoffgehalten ausgebildet werden. Die Kohlenstoffimplantation wird dabei bevorzugt mit Lichtbogenverdampfern und hohen Beschleunigungsspannungen > 500 V durchgeführt.

Bei der gleichzeitigen Sublantation- bzw. Implantation von Kohlenstoff und einem Nitrieren können die Elektronen eines Kohlenstoffverdampfers bevorzugt eines Lichtbogenverdampfers im Vakuum genutzt werden, um Stickstoff zu ionisieren und diesen parallel in die Substratoberfläche einzubringen. Die Stickstoffionen können dann mit einer Biasspannung Richtung Substratoberfläche beschleunigt werden. Gleichzeitig kann der hochionisierte Kohlenstoff mit dem Verdampfer mit gleicher Biasspannung ebenfalls in die Metalloberfläche des Substrats eingebracht werden.

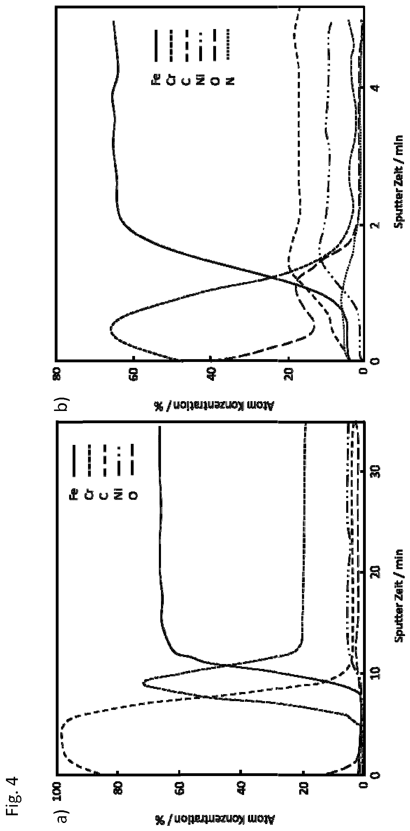

Der Chromgehalt kann dabei entgegen anderen Verfahren, bei denen zusätzliches Chrom aufgebracht wird oder bei Nitriertemperaturen beim Gasnitrieren mit Temperaturen > 800°C gearbeitet wird, zur Oberfläche hin abnehmen (Fig. 4). Die Modifikation der Randschicht kann sich hierbei gegebenenfalls auf den oberflächennahen Teil der Passivierungsschicht z.B. auf 10 nm - 20 nm beschränken. Es können aber auch Modifikationstiefen im Bereich 5 µm erzielt werden. Der Kohlenstoff-Implantations bzw. -Sublantationsprozess kann dazu genutzt werden den Stickstoff schneller in größere Tiefen zu treiben bzw. die Passivierungsschicht zu modifizieren. Die Energiezufuhr des Kohlenstoffprozesses trägt außerdem mit dazu bei eine geeignete Temperaturführung für stattfindende Diffusionsprozesse des Stickstoffs zu gewährleisten.

Auf derartigen Oberflächen können zusätzlich auch Kohlenstoffschichten mit guter Haftfestigkeit abgeschieden werden. Es können aber auch ohne derartige Kohlenstoffschichten gleich gute oder bessere Kontaktwiderstände vor und nach dem Stacktest wie Goldschichten erreicht werden.

Auch beim hier beschriebenen Plasmanitrocarborierprozess können saubere Substratoberflächen aus einem reduzierenden Glühprozess eines vorgeschalteten Fertigungsprozesses inklusives dessen Restwärme genutzt werden, wenn die Fertigungsprozesse ohne Sauerstoffeinwirkung gekoppelt werden können.

Nachfolgend soll die Erfindung anhand von Beispielen näher erläutert werden.

Dabei zeigen:
- Figur 1: Beispiele für strukturierte Oberflächen von Bipolarplatten mit jeweils einer Faser eines als textiles Gebilde ausgebildeten gasdurchlässigen Elements;
- Figur 2: Beispiel einer strukturierten Oberfläche bzw. einer Oberfläche mit erhöhter Rauigkeit
- Figur 3: Beispiele von Bipolarplatten, die mit einer Beschichtung und/oder Randschichten ausgebildet sind.
- Figur 4: XPS-Messungen der Zusammensetzung von Beispielen eines Substrates mit einer Kohlenstoffschicht (links) und eines Substrates mit carbonitrierter Randschicht;

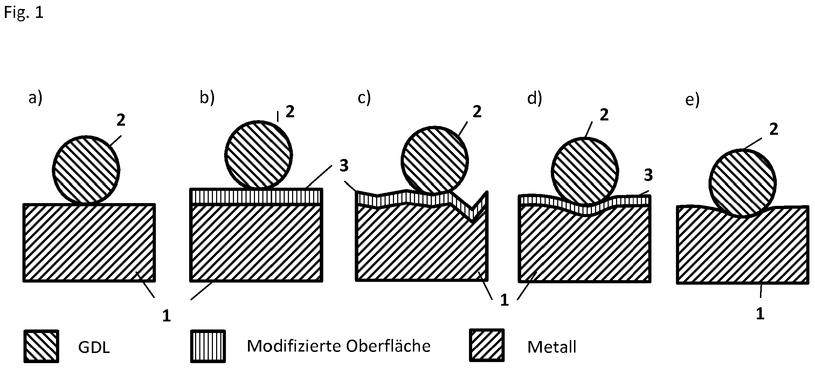

In Figur 1 sind mehrere Beispiele für an der Oberfläche, die mit einem gasdurchlässigen Element in berührendem Kontakt innerhalb einer Brennstoffzelle stehen gezeigt. In Figur 1a ist eine herkömmliche planare Oberfläche eines Substrats 1 einer Bipolarplatte und einer Faser 2 eines als textiles mit Fasern 2 gebildeten gasdurchlässigen Elements ohne Strukturierung nach dem Stand der Technik gezeigt.

Figur 1b zeigt eine ebene planare Oberfläche eines Substrates 1 einer Bipolarplatte, die mit einer Schicht 3 beschichtet ist und an der Oberfläche eine Faser 2 eines gasdurchlässigen Elements anliegt.

Eine unregelmäßig strukturierte und mit einer Schicht 3 beschichtete bzw. modifizierte Oberfläche eines Substrates 1 einer Bipolarplatte, bei der in einer Vertiefung der Strukturierung eine Faser 2 des gasdurchlässigen Elements angeordnet ist und dabei im Bereich der Vertiefung die Faser 2 mit 20 % ihres Umfangs im berührenden Kontakt mit der strukturierten Oberfläche des Substrats 1 der Bipolarplatte steht, ist in Figur 1c gezeigt.

Mit Figuren 1d und 1e sollen Beispiele für eine regelmäßig strukturierte Oberfläche eines Substrats 1 einer Bipolarplatte verdeutlicht werden. Dabei sind in nicht dargestellter Form mehrere Vertiefungen in der Oberfläche des Substrats 1 der Bipolarplatte ausgebildet. Die Vertiefungen sind jeweils gleich dimensioniert, in gleicher Richtung ausgerichtet und in jeweils gleichen Abständen zueinander ausgebildet. In jeweils einer Vertiefung ist zumindest ein Teil einer Faseroberfläche eines als textiles Gebilde ausgebildeten gasdurchlässigen Elements eingeführt, so dass dort die Oberfläche von Fasern 2 mit mindestens 20 % ihrer äußeren Mantelfläche an der Oberfläche der Bipolarplatte 1 (s. Fig. 1e) bzw. der Oberfläche einer Schicht 3 bzw. Oberflächenmodifikation, die auf der Oberfläche des Substrats 1 der Bipolarplatte ausgebildet worden ist, in berührendem Kontakt steht.

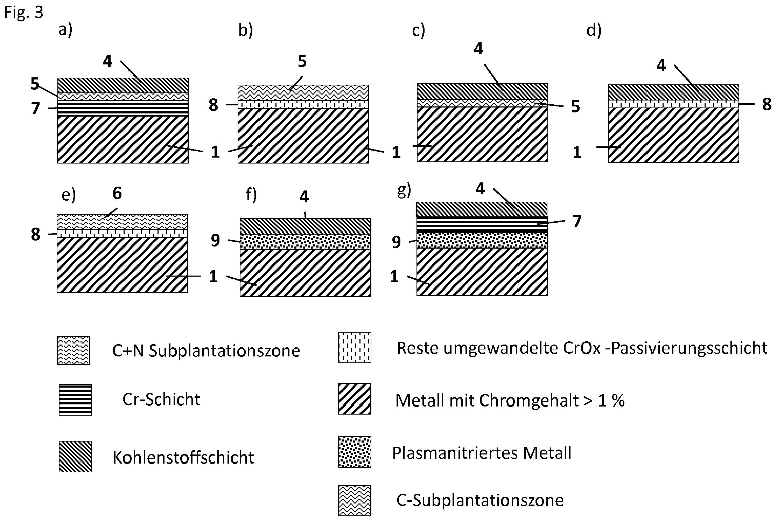

Schichten 3, wie sie in den Figuren 1b bis 1d gezeigt sind, können wie nachfolgend zu den Figuren 3a bis 3g noch beschrieben werden soll, als ein Schichtsystem 3, mehrere übereinander ausgebildete Schichten oder in die Oberfläche diffundierten bzw. implantierten Elementen oder aus einer Kombination hieraus, gebildet werden.

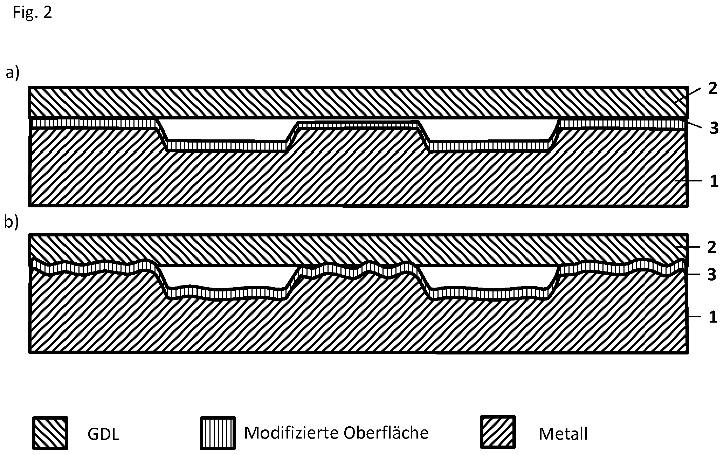

Figur 2a zeigt schematisch die Oberfläche 3 eines Substrats 1 einer Bipolarplatte mit einer glatten Struktur die aufgrund einer Fertigungs- oder Montageungenauigkeit nicht überall Kontakt mit der GDL 2, die beispielsweise mit Fasern 2.1 gebildet ist, der Membraneinheit einer elektrochemischen Zelle hat. Hierdurch wird der elektrische Stromübergang verschlechtert. In Figur 2b ist gezeigt, dass sich die GDL 2 mit den Fasern 2.1 einer strukturierten Oberfläche besser anpassen kann und hierdurch einen besseren Kontakt zur modifizierten Oberfläche 3 hat.

So zeigt Figur 3a eine Bipolarpatte mit einem Substrat 1 aus einem Edelstahl 1.4404, an dessen Oberfläche, die mit dem gasdurchlässigen Element 2 in berührendem Kontakt steht, wenn eine elektrochemische Zelle montiert worden ist, eine Schichtsystem angeordnet ist. Nach einer Reinigung der Oberfläche von Verunreinigungen und Oxiden z. B. mittels Metallionen-Sputtern wird mittels eines PVD Verfahrens, z.B. mittels eines Bogenverdampfers, Chrom abgeschieden. In die Chromschicht 7 wird, bei Temperaturen zwischen 200 °C - 500 °C, als haftvermittelnde Komponente mittels gepulstem oder DC Bogenverdampfers Kohlenstoff verdampft und ionisiert mit hohen negativen Biasspannungen (z.B. 1000 V) im- bzw. subplantiert. Dadurch bildet sich eine kohlenstoffreiche Oberflächenschicht oder eine durch Subplantation erhaltene Kohlenstoffschicht 5 aus. Mittels gepulster Bogenverdampfer wird anschließend hoch ionisierter Kohlenstoff bei niedrigeren Biasspannungen (z.B. ≤ 500 V) abgeschieden. Basierend auf dem hohen Ionisierungsgrad und der hohen Energien der auftreffenden Ionen sowie der resultierenden Oberflächenspannungen und der Temperatur bildet sich an der Oberfläche eine hoch leitfähige nano- bzw. mikostrukturierte Kohlenstoffschicht 4 aus.

Das Schichtsystem bzw. die Oberflächenmodifikationen in den Figuren 3a bis 3g an einer Substratoberfläche einer Bipolarplatte können auf einer strukturierten Oberfläche mit Vertiefungen und/oder Erhebungen ausgebildet werden, was in diesen Darstellungen jedoch nicht gezeigt ist. Die Schichten 4, 5, 6, 7, 8 und 9 sind jeweils auf einer ebenen Bandoberfläche eines Substrats 1, vor einem Umformprozess dargestellt. Sie können aber auch auf schon umgeformten Substraten 1 für Bipolarplatten realisiert werden.

Bei dem in Figur 3b gezeigten Beispiel wird die Chrompassivierungsschicht 8 nicht vollständig entfernt sondern nur oberflächennah partiell umgewandelt, so dass der Sauerstoffanteil reduziert wir. Dies kann durch Glühen in Wasserstoffatmosphären aber auch durch Ätzprozesse erfolgen. Die Kohlenstoffschicht 5 wird dann ohne eine Chromzwischenschicht 7 in die chromreiche ehemalige Chromoxidpassivierungsschicht 8, wie zuvor beschrieben, im- bzw. subplantiert. Hier bildet sich an der Oberfläche der ehemaligen Oxidschicht eine sehr kohlenstoffreiche Oberfläche aus, in der noch Anteile des Metalls, mit dem das Substrat 1 gebildet ist, zu finden sein können, wobei der relative Chrom- und Nickelanteil erhöht ist und zusätzlich Sauerstoff vorkommen kann.

Beim Beispiel 3c wird die Chromoxidpassivierungsschicht 8 vor der Beschichtung, z.B. mittels eines Ätzprozesses, vollständig bzw. zu mindestens 80 % entfernt und dann eine durch Subplantation erhaltene Kohlenstoffschicht 5 mit einer dicke < 20 nm, wie zuvor beschrieben, aufgebracht. Hierauf wird die im Beispiel 3a beschriebene Kohlenstoffschicht 4 abgeschieden (Schichtdicke 10 - 80 nm).

Im Beispiel 3d wird die beschriebene Chrompassivierungsschicht 8 auf eine wie im Beispiel 3b erläuterte Art und Weise gereinigte bzw. partiell umgewandelte Oberfläche aufgebracht, so dass der Sauerstoffanteil reduziert ist. Anschließend wird ohne zuvor Kohlenstoff zu im- bzw. sublantieren eine Kohlenstoffschicht 4 aufgebracht.

Im Beispiel 3e handelt es sich um eine typische plasmanitrocarburierte Oberfläche. Bei sauberem Stahlband als Substrat 1 wurde hier auf ein vorhergehendes Plasmaätzen verzichtet. Bei Temperaturen im Bereich von 350 °C - 500°C im Druckbereich von 10⁻¹ mbar - 10⁻³ mbar wird die Randschicht 6 durch die gleichzeitige Sub- bzw. Implantation von Kohlenstoff- und Stickstoffionen teilweise umgewandelt. Hierbei ergibt sich auch eine gewisse Reinigungswirkung, z.B. für vorhandene Wasserhäute order organisches Material. Oberflächennah werden hohe Kohlenstoffkonzentrationen bei einer moderaten Stickstoffeinbringung erzielt. Die Stickstoffionisation kann dabei durch eine Glimmentladung in einer Stickstoffatmosphäre angeregt durch Elektronen aus einem Bogenverdampfer erfolgen. Es können hierzu Kohlenstoffverdampfer aber auch Chromverdampfer oder andere bogenverdampfende Stoffe genutzt werden. Die Stickstoffionen und die Kohlenstoffionen werden durch hohe Biasspannungen (z.B. 1000V) zur Oberfläche beschleunigt. Die Prozesse können gleichzeitig durchgeführt werden oder aber hintereinander. Hierbei können die Ionen insbesondere die Kohlenstoffionen genutzt werden, um den Stickstoff zu ionisieren als auch die Diffusion in die Metalloberfläche vorteilhaft zu unterstützen. Es sollen, wenn möglich, nur dünne Randschichten 6 im Bereich < 100 nm behandelt werden. An der Oberfläche sollten möglichst wenige Metallionen verbleiben. Bei allen Nitrieroperationen bzw. Kohlenstoffimplantationsprozessen sollte durch ein geeignetes Temperaturregime die übermäßige Bildung von CrN bzw. CrC vermieden werden. Hier bildet sich an der Oberfläche eine sehr kohlenstoffreiche Oberfläche (50 % - 99 %) mit geringeren nitridischen Anteilen (1 % - 20 %) aus, in der noch Anteile des Basismetalls des Substrats 1 (z.B. Fe: 0- 20 %, Cr: 2 %- 30%, Ni 1 % - 10 %) zu finden sein können, wobei der relative Chrom- und Nickelanteil erhöht ist und zusätzlich Sauerstoff vorkommen kann.

Beim Beispiel 3f erfolgt ein reiner Nitrierprozess ohne Kohlenstoff, wie im Beispiel 3e beschrieben. Dieser wird länger durchgeführt, so dass sich größere Eindringtiefen ergeben können. Diese durch nitrieren gebildete Randschicht 9 ermöglicht dann die haftfeste Abscheidung einer Kohlenstoffschicht 4, wie im Beispiel 3a beschrieben. Auf ein vorheriges Entfernen oder Umwandeln einer Passivierungschicht 8 ggf. kann wieder verzichtet werden. Derartige Schichten können dann auch in Tiefen bis zu 5 µm ausgeführt werden. Bei allen Nitrieroperationen sollte durch ein geeignetes Temperaturregime die übermäßige Bildung von CrN vermieden werden.

Im Fig. 3g wird das Schichtsystem nach Figur 3f durch eine Zwischenschicht 7 aus Chrom von z.B. 40 nm ergänzt. Diese wird, wie in 3a beschrieben, abgeschieden. Derartige Zwischenschichten 7 aus Chrom können insbesondere bei Stählen mit geringerem Chromgehalt genutzt werden, um im Verletzungsfall der Deckschicht (Risse. Kratzer, etc.) eine ausreichende Korrosionsbeständigkeit zu gewährleisten. Auch bei Laserschweißnähten können derartige Chromzwischenschichten 7 genutzt werden, um eine Schweißnahtoberraupe mit Chrom aufzulegieren.

Fig. 4a zeigt das schematische XPS Elementanalyse eines GLC-Schichtsystems, wie es in Fig. 3a schematisch im Querschnitt dargestellt ist. Das gesamte Schichtsystem ist bevorzugt in einem Dickenbereich ≤ 100 nm mit einer dünnen haftvermittelte Schicht 7 aus Chrom auszuführen. Alle Prozesse können in einem Druckbereich von 10⁻¹ - 10⁻³ mbar durchgeführt werden. Im Unterschied zu Schichtsystemen mit reiner durch Subplantation erhaltenen Kohlenstoffschicht 5 liegt, abgesehen von einem Oberflächennahen Sauerstoffanteil, der Kohlenstoffanteil bei nahezu 100 %. Durch diese Kohlenstoffschicht 5 kommt es zusätzlich zu einer Mischschicht aus Chrom und Kohlenstoff bzw. in oberflächenferneren Bereichen zu Schichten, die aus Cr, C, Fe und anderen Legierungsbestandteilen des Ausgangsmaterials gebildet sein können.

Eine typische XPS Elementanalyse einer PNC Oberflächenbehandlung zeigt Figur 4b. Charakteristischerweise ist hierbei der Kohlenstoffanteil der durch Subplantation erhaltenen Kohlenstoffschicht 5 geringer im Vergleich zu einer reinen Kohlenstoffschicht 4.

## Patentansprüche

1. Verfahren zur Herstellung einer Bipolarplatte für Proton-Exchange-Membrane- (PEM) Brennstoffzellen, die mit einem metallischen Substrat (1) aus Edelstahl gebildet ist und bei dem
eine Randschicht (6) an einer Oberfläche des Substrats (1) durch ein Nitrier-, ein Carburier- oder ein Carbonitrierverfahren bei Einhaltung einer dafür geeigneten Atmosphäre mittels eines Plasma ausgebildet wird
und/oder
die jeweilige Oberfläche des Substrats (1) mit einer graphitischen Schicht, (3, 4, 5) im Vakuum mittels eines Plasma beschichtet wird
und
eine Strukturierung der mit einem gasdurchlässigen Element (2) in Kontakt stehenden Oberfläche des beschichteten und/oder mit einer Randschicht gebildeten Substrats (1), die mit dem gasdurchlässigen Element (2) in einer elektrochemischen Zelle in berührendem Kontakt steht, mit Erhebungen und/oder Vertiefungen an dieser Oberfläche mittels Werkstoffabtrag und/oder durch ein Prägeverfahren ausgebildet wird.

2. Verfahren nach dem vorhergehenden Anspruch, **dadurch gekennzeichnet, dass** bei einem Carbonitrieren zuerst eine Nitrierung und nachfolgend eine Carburierung der Randschicht (6) durchgeführt wird.

3. Verfahren nach Anspruch 1, **dadurch gekennzeichnet, dass** die jeweilige Oberfläche des Substrats (1) mit einer graphitischen Schicht (3, 4, 5), die vollständig geschlossen mit mehreren übereinander angeordneten Atomlagen gebildet ist, im Vakuum mittels eines Plasma, das bevorzugt mit einer elektrischen Bogenentladung generiert wird, beschichtet wird.

4. Verfahren nach dem vorhergehenden Anspruch, **dadurch gekennzeichnet, dass** vor dem Aufbringen einer graphitischen Schicht (3, 4, 5) oder der Ausbildung einer Randschicht (6) eine auf der Oberfläche des Substrats (1) vorhandene Oxidschicht zumindest teilweise entfernt oder reduziert wird; wobei
die Entfernung mittels eines Ätzprozesses in Argon, Stickstoff oder eine Reduzierung des Oxids in einer wasserstoffhaltigen Atmosphäre durchgeführt wird.

5. Verfahren nach einem der beiden vorhergehenden Ansprüche, **dadurch gekennzeichnet, dass** eine Haftvermittlerschicht (7) aus Chrom, Titan oder einer Schicht, die mit Chrom und Titan gebildet ist, vor dem Aufbringen der graphitischen Schicht (3, 4, 5) mittels einer elektrischen Bogenentladungsprozesses im Vakuum auf der Substratoberfläche ausgebildet wird.

6. Verfahren nach einem der fünf vorhergehenden Ansprüche, **dadurch gekennzeichnet, dass** die graphitische Schicht (3, 4, 5) mit ionisierten und beschleunigten Kohlenstoffionen, die auf auf der Oberfläche des Substrats (1) vorhanden Kohlenstoffatome bei Temperaturen im Bereich 80 °C bis 600 °C mit einer Schichtdicke < 80 nm ausgebildet wird.

7. Verfahren nach dem vorhergehenden Anspruch, **dadurch gekennzeichnet, dass** eine zumindest nahezu 100 %-ige Ionisierung des Kohlenstoffs mittels eines Pulsbogenverdampfers erreicht wird.

8. Verfahren nach Anspruch 1 oder 2, **dadurch gekennzeichnet, dass** das Plasmanitrocarborieren zur Ausbildung der Randschicht (6) in einer vakuumnahen Stickstoff enthaltenden Atmosphäre bei einem Druck im Bereich 10⁻¹ mbar bis 10⁻³ mbar durch eine Nitrierbehandlung bei der Stickstoffionen in Richtung Substratoberfläche beschleunigt werden, wobei am Substrat (1) eine elektrisch negative Biasspannung im Bereich 500 V bis 1000 V angelegt oder das Substrat (1) an Erdpotential angeschlossen ist und eine Temperatur im Bereich 300 °C - 500°C eingehalten wird.

9. Verfahren nach dem vorhergehenden Anspruch, **dadurch gekennzeichnet, dass** Stickstoffionen durch mittels elektrischer Bogenentladung gestützter Glimmentladung erzeugt und in Richtung auf eine gekühlte Anode beschleunigt werden, während entstehende Stickstoffionen abgeschirmt und in Richtung Substratoberfläche beschleunigt werden.

10. Verfahren nach einem der vorhergehenden Ansprüche, **dadurch gekennzeichnet, dass** der Werkstoffabtrag zur Ausbildung von Erhebungen und/oder Vertiefungen mit mindestens einem Laserstrahl in einem bestrahlten Bereich der jeweiligen Substratoberfläche erreicht und/oder die Rauheit und spezifische Oberfläche der jeweiligen Oberfläche eines Substrats (1) durch Beschuss mit Ionen erhöht werden.

11. Verfahren nach dem vorhergehenden Anspruch, **dadurch gekennzeichnet**, dass_Erhebungen und/oder Vertiefungen mit mindestens einem Laserstrahl, bevorzugt durch Interferenz mehrerer Laserstrahlen in einem bestrahlten Bereich der jeweiligen Substratoberfläche erreicht und/oder Rauheit und spezifische Oberfläche der jeweiligen Oberfläche eines Substrats (1) durch Beschuss mit Ionen, die eine Energie im Bereich 10² eV bis 10⁴ eV aufweisen unter Vakuumbedingungen, erhöht werden.

12. Verfahren nach Anspruch 1 oder 2, **dadurch gekennzeichnet, dass** das Plasmanitrocarborieren zur Ausbildung der Randschicht (6) in einer vakuumnahen Stickstoff enthaltenden Atmosphäre bei einem Druck im Bereich 10⁻¹ mbar bis 10⁻³ mbar durch eine Nitrierbehandlung erfolgt, bei der Stickstoffionen durch die Elektronen eines Kohlenstoffverdampfers erzeugt werden und in Richtung der Substratoberfläche, durch eine angelegte elektrische Potentialdifferenz, beschleunigt werden und die Sublantation- bzw. Implantation von Kohlenstoff parallel durch denselben Kohlenstoffverdampfer erfolgt.

## Claims

1. A method for producing a bipolar plate for proton-exchange membrane (PEM) fuel cells, which is formed with a metallic substrate (1) made of stainless steel, wherein
an edge layer (6) is formed by means of a plasma on a surface of the substrate (1) by way of a nitriding, a carburizing or a carbonitriding process, while maintaining an atmosphere suitable for this purpose, and/or
the particular surface of the substrate (1) is coated with a graphitic layer (3, 4, 5) by means of a plasma under vacuum,
and
a structuring of the surface of the substrate (1) that is coated and/or formed with an edge layer, the surface being in contact with a gas-permeable element (2) and being in touching contact with the gas-permeable element (2) in an electrochemical cell, is provided with elevations and/or depressions on this surface, by means of material removal and/or by way of an embossing method.

2. The method according to the preceding claim, **characterized in that**, in the case of carbonitriding, the edge layer (6) is first nitrided and then carburized.

3. The method according to claim 1, **characterized in that** the particular surface of the substrate (1) is coated with a graphitic layer (3, 4, 5), which is formed to be completely closed comprising multiple atomic layers arranged on top of one another, under vacuum by means of a plasma, which is preferably generated by an electric arc discharge.

4. The method according to the preceding claim, **characterized in that** an oxide layer that is present on the surface of the substrate (1) is at least partially removed or reduced, prior to the application of a graphitic layer (3, 4, 5) or the formation of an edge layer (6),
the removal being carried out by means of an etching process in argon, nitrogen, or a reduction of the oxide being carried out in a hydrogen-containing atmosphere.

5. The method according to one of the two preceding claims, **characterized in that** an adhesion promoter layer (7) made of chromium, titanium, or a layer formed with chromium and titanium, is formed on the substrate surface, prior to the application of the graphitic layer (3, 4, 5), by means of an electric arc discharge process under vacuum.

6. The method according to one of the five preceding claims, **characterized in that** the graphitic layer (3, 4, 5) is formed with ionized and accelerated carbon ions, which carbon atoms present on the surface of the substrate (1) at temperatures in the range of 80°C to 600°C with a layer thickness of < 80 nm.

7. The method according to the preceding claim, **characterized in that** at least substantially 100% ionization of the carbon is achieved by means of a pulsed arc evaporator.

8. The method according to claim 1 or 2, **characterized in that** the plasma nitrocarburization for forming the edge layer (6) in a near-vacuum nitrogen-containing atmosphere, at a pressure in the range of 10⁻¹ mbar to 10⁻³ mbar, by a nitriding treatment during which nitrogen ions are accelerated in the direction of the substrate surface, an electrically negative bias voltage in the range of 500 V to 1000 V being applied to the substrate (1), or the substrate (1) being connected to ground potential, and a temperature in the range of 300°C to 500°C being maintained.

9. The method according to the preceding claim, **characterized in that** nitrogen ions are generated by means of electric arc discharge-supported glow discharge and accelerated in the direction of a cooled anode, while arising nitrogen ions are shielded and accelerated in the direction of the substrate surface.

10. The method according to any one of the preceding claims, **characterized in that** the material removal for forming elevations and/or depressions is achieved by at least one laser beam in an irradiated region of the particular substrate surface, and/or the roughness and specific surface area of the particular surface of a substrate (1) are increased by bombardment with ions.

11. The method according to the preceding claim, **characterized in that** elevations and/or depressions are achieved by at least one laser beam, preferably by interference of a plurality of laser beams, in an irradiated region of the particular substrate surface, and/or the roughness and specific surface area of the particular surface of a substrate (1) are increased by bombardment with ions having an energy in the range of 10² eV to 10⁴ eV, under vacuum conditions.

12. The method according to claim 1 or 2, **characterized in that** the plasma nitrocarburization for forming the edge layer (6) is carried out in a near-vacuum nitrogen-containing atmosphere at a pressure in the range of 10⁻¹ mbar to 10⁻³ mbar by a nitriding treatment, during which the nitrogen ions are generated by the electrons of a carbon evaporator and accelerated in the direction of the substrate surface, by an applied electrical potential difference, and the subplantation or implantation of carbon is carried out in parallel by the same carbon evaporator.

## Revendications

1. Procédé de fabrication d'une plaque bipolaire pour des cellules de combustible à membrane échangeuse de protons (PEM), qui est constituée d'un substrat métallique (1) en acier inoxydable, et chez lequel
une couche superficielle (6) est formée sur une surface du substrat (1) par un procédé de nitration, un procédé de carburation ou un procédé de carbonitruration en maintenant une atmosphère adéquate au moyen d'un plasma, et/ou
la surface du substrat (1) respective est revêtue d'une couche graphitique (3, 4, 5) sous vide au moyen d'un plasma
et
une structuration de la surface du substrat (1) recouverte et/ou formée avec une couche superficielle, en contact avec un élément (2) perméable aux gaz, qui est en contact matériel dans une cellule électrochimique avec l'élément (2) perméable aux gaz, est conçue avec des protubérances et/ou des creux sur cette surface au moyen d'un retrait de matière et/ou d'un procédé d'estampage.

2. Procédé selon la revendication précédente, **caractérisé en ce que**, lors d'une carbonitruration, on effectue d'abord une nitruration et ensuite une carburation de la couche superficielle (6).

3. Procédé selon la revendication 1, **caractérisé en ce que** la surface respective du substrat (1) est revêtue avec une couche graphitique (3, 4, 5), qui est totalement fermée avec plusieurs couches d'atomes disposées les unes sur les autres, sous vide au moyen d'un plasma, qui est de préférence généré avec une décharge par arc électrique.

4. Procédé selon la revendication précédente, **caractérisé en ce qu'**avant l'application d'une couche graphitique (3, 4, 5) ou la formation d'une couche superficielle (6), une couche d'oxyde présente sur la surface du substrat (1) est retirée au moins partiellement ou est réduite ; où
le retrait est effectué au moyen d'un procédé de gravure dans de l'argon, de l'azote ou d'une réduction de l'oxyde dans une atmosphère contenant de l'hydrogène.

5. Procédé selon l'une des deux revendications précédentes, **caractérisé en ce qu'**une couche de promoteur d'adhésion (7) à base de chrome, de titane, ou une couche qui est constituée avec du chrome et du titane, est formée sur la surface du substrat avant l'application de la couche graphitique (3, 4, 5) au moyen d'un procédé de décharge par arc électrique sous vide.

6. Procédé selon l'une des cinq revendications précédentes, **caractérisé en ce que** la couche graphitique (3, 4, 5) est formée avec des atomes de carbone ionisés et accélérés, qui est formée sur les atomes de carbone présents sur la surface du substrat (1) à des températures dans la plage de 80 °C à 600 °C avec une épaisseur de couche < 80 nm.

7. Procédé selon la revendication précédente, **caractérisé en ce qu'**une ionisation à au moins presque 100 % du carbone est atteinte au moyen d'un évaporateur à arc par impulsions.

8. Procédé selon la revendication 1 ou la revendication 2, **caractérisé en ce que** la carbonitruration par plasma pour la formation de la couche superficielle (6) dans une atmosphère contenant de l'azote proche du vide à une pression dans la plage de 10⁻¹ mbar à 10⁻³ mbar par un traitement de nitration, dans lequel les ions d'azote sont accélérées en direction de la surface du substrat, où une tension électrique de bias dans la plage de 500 V à 1000 V est appliquée au substrat (1), ou le substrat (1) est relié au potentiel de la terre et est maintenu à une température dans la plage de 300 °C à 500 °C.

9. Procédé selon la revendication précédente, **caractérisé en ce que** des ions d'azote sont créés au moyen d'une décharge luminescente assistée d'une décharge par arc électrique et sont accélérés en direction d'une anode refroidie, tandis que des ions d'azote créés sont isolés et accélérés en direction de la surface du substrat.

10. Procédé selon l'une des revendications précédentes, **caractérisé en ce que** le retrait de matière pour la formation des protubérances et/ou des creux peut être réalisé avec au moins un rayonnement laser dans une zone irradiée de la surface de substrat respective, et/ou la rugosité et la surface spécifique de la surface respective d'un substrat (1) sont augmentées par un bombardement d'ions.

11. Procédé selon la revendication précédente, **caractérisé en ce que** des protubérances et/ou des creux peuvent être réalisés avec au moins un rayonnement laser, de préférence, par l'interférence de plusieurs rayonnements laser, dans une zone irradiée de la surface du substrat respective, et/ou la rugosité et la surface spécifique de la surface respective d'un substrats (1) sont augmentées par un bombardement d'ions qui présentent une énergie dans la plage de 10² eV à 10⁴ eV dans des conditions de vide.

12. Procédé selon la revendication 1 ou la revendication 2, **caractérisé en ce que** la carbonitruration par plasma pour la formation d'une couche superficielle (6) a lieu dans une atmosphère contenant de l'azote proche du vide à une pression dans la plage de 10⁻¹ mbar à 10⁻³ mbar par un traitement de nitration, dans lequel des ions d'azote sont créés par les électrons d'un évaporateur de carbone et sont accélérés en direction de la surface du substrat par une différence de potentiel appliquée et la sublantation, respectivement l'implantation, de carbone a lieu parallèlement par le même évaporateur de carbone.
